# EUROPEAN PATENT SPECIFICATION

(11) **EP 3 852 003 B1**
(45) Date of publication and mention of the grant of the patent: **04.11.2026**
(21) Application number: 19860589.1
(22) Date of filing: 03.09.2019
(51) Int. Cl.: G06V 10/774, G06V 40/16, G06V 10/82, G06T 7/73

(54) **FEATURE POINT LOCATING METHOD, STORAGE MEDIUM AND COMPUTER DEVICE**
LOKALISIERUNGSVERFAHREN FÜR MERKMALSPUNKT, SPEICHERMEDIUM UND COMPUTERVORRICHTUNG
PROCÉDÉ DE LOCALISATION DE POINT CARACTÉRISTIQUE, SUPPORT D'INFORMATIONS ET DISPOSITIF INFORMATIQUE

(30) Priority: 14.09.2018 CN 201811073920
(43) Date of publication of application: 21.07.2021
(73) Proprietor: Tencent Technology (Shenzhen) Company Limited, Shenzhen, Guangdong 518057 (CN)
(72) Inventor: ZHAO, Yandan, Shenzhen, Guangdong 518057 (CN); YAN, Yichao, Shenzhen, Guangdong 518057 (CN); CAO, Weijian, Shenzhen, Guangdong 518057 (CN); CAO, Yun, Shenzhen, Guangdong 518057 (CN); GE, Yanhao, Shenzhen, Guangdong 518057 (CN); WANG, Chengjie, Shenzhen, Guangdong 518057 (CN); LI, Jilin, Shenzhen, Guangdong 518057 (CN)
(74) Representative: Novagraaf International SA
(86) International application number: PCT/CN2019/104241
(87) International publication number: WO 2020/052476

(56) References cited:
- WO-A1-2017/041303
- CN-A- 101 477 690
- CN-A- 105 760 826
- CN-A- 108 509 825
- CN-A- 109 344 742
- US-A1- 2008 187 175
- US-A1- 2018 018 503
- US-A1- 2018 137 630

## Description

### FIELD

The present disclosure relates to the field of computer technologies, and in particular to a feature point positioning method, a storage medium, and a computer device.

### BACKGROUND

With the rapid development of computer technologies and image processing technologies, increasing fields relate to positioning feature points in an image during the image processing, to perform subsequent application according to the positioned feature points. For example, face feature points positioned in a face image may be used in a scenario such as expression recognition or face recognition.

However, in many application scenarios, a case that a target area is shielded may occur. For example, a face area may be shielded by hair, a hand, or the like. In the conventional feature point positioning technology, if the target area is shielded, there may be a problem of inaccurate feature point positioning.

US 2008/0187175 A1 relates to a method and apparatus for tracking an object, and for calculating object pose information. The method of tracking the object obtains object feature point candidates by using a difference between pixel values of neighboring frames. A template matching process is performed in a predetermined region having the object feature point candidates as the center.

### SUMMARY

There are provided a feature point positioning method, and a computer device according to embodiments of the present disclosure, to improve accuracy of feature point location positioning. The invention is defined in the independent claims to which reference should now be directed. Advantageous features are set out in the dependent claims.

### BRIEF DESCRIPTION OF THE DRAWINGS

FIG. 1 is a diagram showing an application environment of a feature point positioning method according to an embodiment;
FIG. 2 is a schematic flowchart of a feature point positioning method according to an embodiment;
FIG. 3 is a schematic diagram showing face feature points in a face image according to an embodiment;
FIG. 4 is a schematic diagram of adding an additional element to an image according to an embodiment;
FIG. 5 is a schematic diagram showing a connection between models in a feature point positioning method according to an embodiment;
FIG. 6 is a schematic diagram showing a connection between models in a feature point positioning method according to another embodiment;
FIG. 7 is a schematic flowchart showing a feature point positioning process according to an embodiment;
FIG. 8 is a diagram showing a module structure of a computer device according to an embodiment;
FIG. 9 is a diagram showing a module structure of a computer device according to another embodiment; and
FIG. 10 is a diagram showing an internal structure of a computer device according to an embodiment.

### DETAILED DESCRIPTION OF THE EMBODIMENTS

To make the objectives, technical solutions, and advantages of the present disclosure clearer and more comprehensible, the present disclosure is further described in detail with reference to the accompanying drawings and the embodiments. It is to be understood that the specific embodiments described herein are only used for explaining the present disclosure, but are not intended to limit the present disclosure.

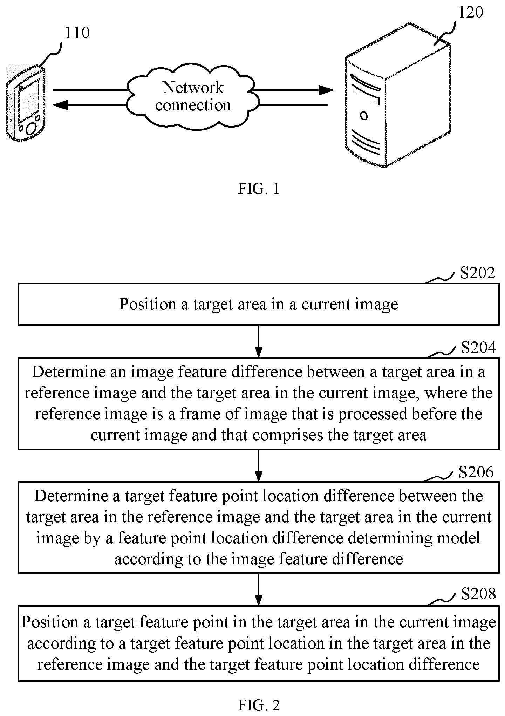

FIG. 1 is a diagram showing an application environment of a feature point positioning method according to an embodiment. Referring to FIG. 1, the feature point positioning method is applied to a feature point positioning system. The feature point positioning system includes a terminal 110 and a server 120. The terminal 110 is connected to the server 120 via a network. The terminal 110 may be a desktop terminal or a mobile terminal. The mobile terminal may be at least one of a mobile phone, a tablet computer, a notebook computer, and the like. The server 120 may be an independent server, or may be a server cluster including multiple independent servers. Either the terminal 110 or the server 120 may be used to perform the feature point positioning method independently.

For example, the terminal 110 or the server 120 may position a target area in a current image. The terminal 110 or the server 120 determines an image feature difference between a target area in a reference image and the target area in the current image. The terminal 110 or the server 120 determines a target feature point location difference between the target area in the reference image and the target area in the current image according to the image feature difference by a feature point location difference determining model. The terminal 110 or the server 120 positions a target feature point in the target area in the current image according to a target feature point location in the target area in the reference image and the target feature point location difference.

The reference image is a frame of image that is processed before the current image and that includes the target area. The current image may be an image acquired in real time by the terminal 110 through a built-in or externally connected image acquisition apparatus. The current image may also be a video frame in an existing video. After acquiring an image, the terminal 110 may perform the feature point positioning method locally, or may transmit the acquired image to the server 120 so that the server 120 performs the feature point positioning method. In addition, processing the image in the existing video may be performed by the terminal 110 locally or by the server 120.

FIG. 2 is a schematic flowchart of a feature point positioning method according to an embodiment. In this embodiment, the description is given by taking the case of applying the feature point positioning method to a computer device as an example. The computer device may be the terminal 110 or the server 120 shown in FIG. 1. Referring to FIG. 2, the feature point positioning method may include the following steps S202 to S208.

**In** S202, a target area is positioned in a current image.

The current image is an image that needs to be currently processed. For example, the current image may be an image acquired in real time, or may be a video frame included in a video.

**In** an embodiment, in a case that the computer device is a terminal, the terminal may acquire an image according to a fixed or dynamic frame rate, and obtain the acquired image as a current image. With the fixed or dynamic frame rate, successive dynamic pictures or a synthesized video can be formed when the images are played according to the fixed or dynamic frame rate.

**In** an embodiment, in a case that the computer device is a terminal, the terminal may acquire an image by a built-in or externally connected image acquisition apparatus in a current view of the image acquisition apparatus, and obtain the acquired image as a to-be-processed current image. The view of the image acquisition apparatus may vary with a posture and a position of the terminal. The image acquisition apparatus of the terminal may be a front-facing camera or a rear-facing camera.

**In** an embodiment, in a case that the computer device is a terminal, the terminal may receive an image that is acquired and transmitted by another terminal, and obtain the received image as a current image. For example, in a case that a video session is established between multiple terminals by a social application running on the terminals, a terminal corresponding to a session party receives an image that is acquired and transmitted by a terminal corresponding to another session party, as a current image.

**In** an embodiment, in a case that the computer device is a server, the terminal in the foregoing embodiment may upload the obtained image to the server, so that the server obtains the current image.

**In** another embodiment, the computer device may obtain, according to an order of video frames included in a video, a video frame included in the video, as a current image.

The target area is an area including a target in an image. The target may be a static target, for example, a building. Alternatively, the target may be a dynamic target, for example, a face of a natural person or a plane. Thus, in different image frames, the target area may be a static area, or may be a dynamic area. The target area may be an area such as a face area or a hand area. In an exemplary solution, the target area may be a rectangular area, or may be an area having another specified shape. For example, the target area may be a circular area, a triangular area, or the like.

**In** an embodiment, the computer device may input the current image into a target detection model, and determine a target area in the current image by the target detection model. For example, the computer device may determine an image location of the target area by the target detection model (for example, an SSD model or an RCNN model), or may perform semantic segmentation by the target detection model (for example, a Unet model) to determine a pixel point set of target semantics, so as to find the target area in the current image.

**In** an embodiment, step S202 is performed by: querying a target feature point location in a target area in a previous frame of image of the current image; determining a target preselection area in the current image according to the queried target feature point location in the target area in the previous frame of image; and expanding the target preselection area in the current image according to a preset multiple, to obtain the target area in the current image.

The target feature point location is location information of a target feature point in an image. For example, the target feature point location may be coordinate information representing a pixel location of a feature point. The target feature point is a key point having a representation capability in the target area. For example, in a case that the target area is a face area, the target key point is a face feature point. The face feature point may be, but is not limited to, a key point of an eye, a nose, a mouth, an eyebrow, a face contour or the like.

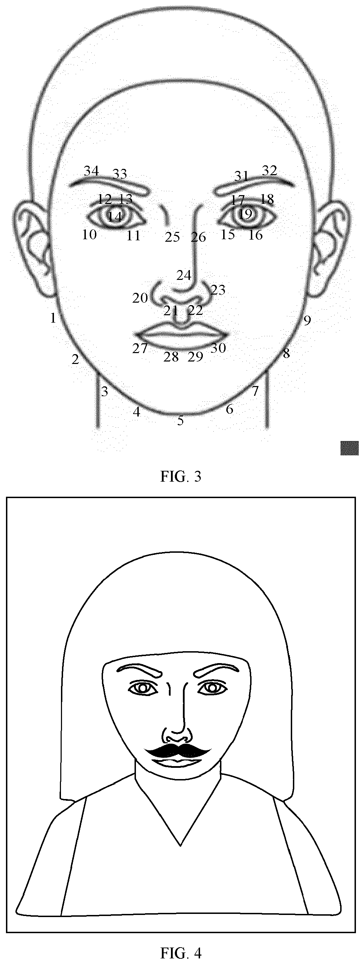

FIG. 3 is a schematic diagram showing face feature points in a face image according to an embodiment. The face feature points include: face contour key points, i.e., points 1 to 9 in the figure, left eye key points and right eye key points, i.e., points 10 to 14 and points 15 to 19 in the figure, nose key points, i.e., points 20 to 26 in the figure, lip key points, i.e., points 27 to 30 in the figure, left eyebrow key points and right eyebrow key points, i.e., points 31 and 32 and points 33 and 34 in the figure, and the like. It may be understood that, the face feature points shown in FIG. 3 are only used as an example for description, and do not limit the number of feature points in the embodiments of the present disclosure. In an actual scenario, the positioned face feature points may include more or fewer face feature points than those shown in FIG. 3.

The target preselection area is a preselection area for determining the target area. It may be understood that, in a frame of image, an area where a target feature point location is located may be considered as a target area in the image. Further, in different images, the target area may be a static area or a dynamic area, and a dynamic change of the target area has continuity. That is, a target area in a previous frame of image may be used as a target preselection area in a current image, and the target preselection area is expanded, to obtain a target area in the current image.

It should be note that, the solution provided in the present disclosure may be a solution for performing feature point positioning on a series of images. In this case, when each frame of image in the series of images is processed, the image is a to-be-processed current image. There may be multiple frames of images that have not been processed after the current image, and there may be multiple frames of processed images before the current image. In this way, each time completing the feature point positioning on a frame of image, the computer device may store a target feature point location positioned in the image for subsequent use.

For example, after obtaining a to-be-processed current image, the computer device may query a target feature point location in a target area in a previous frame of image of the current image. In this way, the computer device may determine the target area in the previous frame of image, i.e., a target preselection area in the current image, according to the queried target feature point location. Then, the computer device may obtain the target area in the current image by expanding the target preselection area in the current image according to a preset multiple. The preset multiple may be 1.3, or may be another multiple such as 1.2 or 1.4.

It may be understood that, the current image in this embodiment is not the first frame of image that is processed by the computer device and that includes a target area. Since there is no image including a target area before the first frame of image including the target area, there is no referable image used for determining a target preselection area. In this case, the target area needs to be positioned from a complete image according to another embodiment.

**In** this embodiment of the present disclosure, the image for determining the target area is not limited to the previous frame of image of the current image, and may be a frame of image among multiple frames of continuous images before the current image, where the multiple frames of continuous images may include the previous frame of image of the current image.

**In** this embodiment, it may be considered according to prior knowledge of motion continuity that, the target area in the current image may be located near a target area in a frame of image among the multiple frames of continuous images before the current image in a relatively large probability, especially near the target area in the previous frame of image of the current image. That is, theoretically, any frame of image among the multiple frames of continuous images may be used for positioning the target area in the current image. Therefore, in the process that the target area is positioned in the current image, the search is not required to be performed from the complete image, thereby improving efficiency of positioning the target area.

**In** S204, an image feature difference between a target area in a reference image and the target area in the current image is determined. The reference image is a frame of image that is processed before the current image and that includes the target area.

The reference image is an image used as a reference to position a feature point in the current image. The image feature difference is a difference between two frames of images in an image feature. The image feature herein may be data having a characteristic of representing a target.

For example, the computer device may extract image pixel information of the target area in the reference image and image pixel information of the target area in the current image, respectively. Then, the computer device inputs the two pieces of extracted image pixel information respectively into a single-frame image feature extraction model, and obtains image features outputted by the single-frame image feature extraction model, that is, an image feature of the target area in the reference image and an image feature of the target area in the current image. The computer device may calculate a difference between the two image features, to obtain the image feature difference between the target areas respectively in the two frames of images. The single-frame image feature extraction model is a machine learning model that is trained in advance and that is used for performing image feature extraction according to image pixel information of a target area in a single frame of image.

The image pixel information may be an image pixel matrix. The image may be classified into a grayscale image and a color image. The image may have one or more image pixel matrixes. The grayscale image usually includes one channel. In this case, the grayscale image includes one image pixel matrix, that is, a matrix formed by arraying grayscale values of pixel points in the grayscale image according to pixel locations. The color image usually includes three channels, that is, an R channel, a G channel, and a B channel. Therefore, the color image usually includes three image pixel matrixes, that is, three matrixes respectively formed by arraying values of pixel points in the color image respectively on the channels according to pixel locations.

**In** an embodiment, the process of determining the image feature difference between the target area in the reference image and the target area in the current image may be performed by: calculating an image pixel difference between the target area in the reference image and the target area in the current image; inputting the obtained image pixel difference into a second image feature extraction model; and obtaining the image feature difference outputted by the second image feature extraction model.

The second image feature extraction model is a machine learning model that is trained in advance and that is used for performing image feature extraction according to an image pixel difference between target areas respectively in two frames of images. Machine Learning is called as ML for short. The machine learning model may have a certain capability through sample learning. The machine learning model may be implemented by a neural network model, a support vector machine, a logistic regression model, or the like. It may be understood that, both the second image feature extraction model herein and the single-frame image feature extraction model in the foregoing embodiment are image feature extraction models. Optionally, due to different input data of the models, parameters of the models may also be different.

For example, after extracting the image pixel information of the target area in the reference image and the image pixel information of the target area in the current image, respectively, the computer device may first calculate an image pixel difference between the target area in the reference image and the target area in the current image, and then input the calculated image pixel difference into the second image feature extraction model, so that the second image feature extraction model processes the inputted image pixel information. The computer device obtains the image feature difference outputted by the second image feature extraction model.

The image pixel information may be an image pixel matrix. The image pixel difference may be a difference between image pixel matrixes of target areas respectively in two frames of images.

**In** an exemplary embodiment, the second image feature extraction model may be a complex network model formed by interconnecting multiple layers. The second image feature extraction model may include multiple feature transform layers, and each feature transform layer has a corresponding model parameter. The number of the model parameter of each layer may be more than one. One model parameter in each feature transform layer is used to perform linear or non-linear transformation on inputted data, to obtain a feature map as an operation result. Each feature transform layer receives an operation result of a previous layer, and outputs an operation result of the current layer to a next layer after its own operation. The model parameter is a parameter in a model structure and can reflect a correspondence between an output and an input of the model. The feature transform layer includes but is not limited to a convolution layer, a fully connected layer, or the like. The number of the convolution layer or the fully connected layer may be set according to actual requirements.

**In** the foregoing embodiments, after the current image is obtained, the image pixel difference between the target area in the reference image and the target area in the current image is automatically calculated, the image pixel difference is inputted into the trained machine learning model, and the image feature difference is obtained by the machine learning model. In this way, accuracy of image feature difference extraction can be improved by means of powerful learning and computing capabilities of the machine learning model.

**In** S206, a target feature point location difference between the target area in the reference image and the target area in the current image is determined by a feature point location difference determining model according to the image feature difference.

The feature point location difference determining model is a machine learning model that is trained in advance and that is used for determining a feature point location difference according to an image feature difference between target areas respectively in two frames of images. Similarly, the feature point location difference determining model may be a complex network model formed by interconnecting multiple layers. For description of the network model, reference may be made to the description in the foregoing embodiment. Details thereof are not described herein again.

The target feature point location difference is a difference between target feature points of target areas respectively in two frames of images in a location. The target area may include one or more target feature points. The target feature point location difference is a set of location differences between target feature points corresponding to the target areas respectively in the two frames of images.

For example, the target area is a face area. Assuming that there are N face feature points, the target feature point location difference includes N location differences, and each location difference corresponds to one face feature point. The location difference is a location difference between the target feature points corresponding to the target areas respectively in the two frames of images, for example, a location difference between an i-th feature point of the target area in the reference image and an i-th feature point of the target area in the current image.

It may be understood that the same target includes the same target feature point. Generally, as the target moves, the target feature point does not change, but a location of the target feature point changes. For example, the target is a face. As the face moves, a face feature point does not change substantially, but a location of the face feature point changes. In this case, a frame of image that is processed before the current image and that includes the target area may be used as a reference image, and a target feature point location difference between the current image and the reference image may be obtained according to an image feature difference between the current image and the reference image.

For example, the computer device may input the image feature difference between the target area in the reference image and the target area in the current image into the feature point location difference determining model, so that the feature point location difference determining model processes the inputted image feature difference. The computer device obtains the target feature point location difference outputted by the feature point location difference determining model.

**In** an embodiment, the image feature difference is an image pixel difference, and the second image feature extraction model and the feature point location difference determining model may be implemented by one machine learning model. In this case, an input of the machine learning model is an image pixel difference between target areas respectively in two frames of images, and an output of the machine learning model is a target feature point location difference between the target areas respectively in the two frames of images.

**In** S208, a target feature point is positioned in the target area in the current image according to a target feature point location in the target area in the reference image and the target feature point location difference.

The target feature point location is location information of a target feature point in an image. For example, the target feature point location may be coordinate information representing a pixel location of a feature point. In a case that the number of the target feature point is more than one, the target feature point location may be a set of coordinate information of pixel locations of the multiple feature points.

For example, the target area is a face area and is a two-dimensional area, and there are N face feature points. In this case, location information of an i-th feature point of the face area may be indicated by (Xi, Yi), and a face feature point location of the face area is indicated by {(X1, Y1), (X2, Y2), ..., (Xi, Yi), ..., (XN, YN)}. The target area may also be a three-dimensional area, and in this case, the location information of the i-th feature point of the face area may be indicated by (Xi, Yi, Zi).

For example, after obtaining the target feature point location difference between the target area in the reference image and the target area in the current image, the computer device may query a target feature point location in the target area in the reference image. Then, the computer device may add the target feature point location in the target area in the reference image and the obtained target feature point location difference or subtract the obtained target feature point location difference from the target feature point location of the target area in the reference image, to obtain a target feature point location in the target area in the current image, so that a target feature point can be positioned in the target area in the current image.

It may be understood that, in a case that the image feature difference used for obtaining the target feature point location difference is obtained by subtracting an image feature of the target area in the current image from an image feature of the target area in the reference image, the target feature point location difference may be considered as being obtained by subtracting the target feature point location in the target area in the current image from the target feature point location in the target area in the reference image. That is, the target feature point location in the target area in the current image is obtained by subtracting the target feature point location difference from the target feature point location in the target area in the reference image. In a case that the image feature difference used for obtaining the target feature point location difference is obtained by subtracting an image feature of the target area in the reference image from an image feature of the target area in the current image, the target feature point location difference may be considered as being obtained by subtracting the target feature point location in the target area in the reference image from the target feature point location in the target area in the current image. That is, the target feature point location in the target area in the current image is obtained by adding the target feature point location in the target area in the reference image and the target feature point location difference.

For example, if the target feature point location difference between the target area in the reference image and the target area in the current image is indicated by {(x1, y1), (x2, y2), ..., (xi, yi), ..., (xN, yN)}, and the target feature point location in the target area in the reference image is indicated by {(X1, Y1), (X2, Y2), ..., (Xi, Yi), ..., (XN, YN), the target feature point location in the target area in the current image is expressed as {(X1+/-x1, Y1+/-y1), (X2+/-x2, Y2+/-y2), ..., (Xi+/-xi, Yi+/-yi), ..., (XN+/-xN, YN+/-yN)}.

**In** an embodiment, the feature point positioning method further includes: adding an additional element to the current image according to the target feature point positioned in the target area in the current image.

For example, after a feature point is positioned in the target area, a subsequent process may be performed by using the positioned feature point. For example, an additional element is added to the image according to the positioned feature point. As another example, feature point positioning for a face area may be used for expression recognition and the like. After the expression recognition, an additional element corresponding to an expression may be added to the image. In addition, feature point positioning for a hand area may be used for gesture recognition and the like. After the gesture recognition, an additional element corresponding to a gesture may be added to the image.

The additional element is data that is additionally added to an image frame. The additional element may be a decoration element, for example, a pendant. The decoration element is data that is used for decoration and that can be displayed in a visual form. The additional element is, for example, data displayed in the image frame to decorate the image content. The additional element is, for example, a mask, armor, a colored ribbon, blue sky, or white cloud. The type of the additional element is not limited in this embodiment of the present disclosure. The additional element may be dynamic data, for example, a dynamic picture, or may be static data, for example, a static picture.

FIG. 4 is a schematic diagram of adding an additional element to an image according to an embodiment. In this embodiment, the target area is a face area, and the target feature point is a face key point. After positioning a face feature point in a current image, the computer device may determine a lip location according to a lip key point, and add a beard at the location, which is shown with reference to FIG. 4.

**In** this embodiment, after the target feature point is positioned in the image, an additional element is added according to the positioned feature point, enriching the image content and improving accuracy of adding the additional element.

With the feature point positioning method, after a target area is positioned in a current image, an image feature difference between a target area in a reference image and the target area in the current image is automatically determined. In this way, a target feature point location difference between the target area in the reference image and the target area in the current image can be determined by a feature point location difference determining model according to the image feature difference. Since the reference image is a frame of image processed before the current image, a target feature point may be positioned in the target area in the current image according to a target feature point location in the target area in the reference image and the obtained target feature point location difference. In this way, in the process that the target feature point is positioned for the current image, final feature point positioning is performed with reference to image information of a processed image and according to a target feature point difference between images, improving accuracy of feature point positioning. In addition, by repeatedly using the image information of the processed image, a sudden change in the location of the same feature point between different frames of images can be smoothed, thereby avoiding jitter of the feature point to a great extent, compared with a case that a feature point is positioned only according to the current image.

**In** an embodiment, the target area is a face area, and the target feature point is a face feature point. The feature point positioning method further includes: obtaining an image according to a time sequence; detecting a face area in the obtained image; in a case that the face area is detected in the obtained image, determining the image in which the face area is detected as the reference image; and determining, after the reference image is determined, an image that is obtained next as the current image.

The process of obtaining the image according to the time sequence may be a process of obtaining an acquired image according to an image acquisition time sequence, or a process of obtaining a video frame included in a video according to an order of video frames included in the video. The face area may be a face area of a natural person, a face area of a virtual object, a face area of an animal, or the like.

For example, each time obtaining a frame of image, the computer device detects a face area in the obtained image. If the computer device does not detect the face area in the image, the computer device ends the processing for the image and continues to obtain a next frame of image for performing face area detection. If the computer device detects the face area in the image, the computer device determines the image in which the face area is detected as a reference image, and processes the reference image in a preset processing manner for the reference image. The processing manner for the reference image is described in subsequent embodiments. Further, after determining the reference image, the computer device determines an image that is obtained next as a current image, and performs the steps S202 to S208 in the foregoing embodiments on the current image.

It may be understood that, in this embodiment of the present disclosure, in the process of performing feature point positioning on a series of images, the computer device first performs face area detection on the images to determine a reference image, and does not perform subsequent processing on the images if the reference image is not determined. After determining the reference image, the computer device processes the reference image in the processing manner for the reference image and performs the steps S202 to S208 in the foregoing embodiments on an image obtained after the reference image. That is, the computer device processes the reference image and a non-reference image respectively in different processing manners.

**In** this embodiment, the reference image is the first frame of image including a face area. In this case, for each frame of current image, an image feature difference on which positioning a feature point depends is a feature difference between the current image and the first frame of image including the face area, so that an accumulated error can be avoided, thereby improving the accuracy of feature point positioning.

**In** an embodiment, the feature point positioning method further includes: querying a reference image replacement condition; and in a case that the image that is obtained next is determined as the current image, determining the current image obtained in a case that the reference image replacement condition is met as a new reference image.

The reference image replacement condition is a constraint condition that is required to be met when the reference image is replaced. That is, a reference image replacement operation is performed only when the constraint condition of the reference image replacement condition is met. The reference image replacement condition may be a constraint condition for a processing time in the image processing, or may be a constraint condition for the number of processed images in the image processing, or the like.

For example, after determining the first reference image, the computer device may continue to obtain an image according to the time sequence, and detect whether a current node reaches a preset node. When detecting that the current node reaches the preset node, the computer device may determine that the reference image replacement condition is met at the current node, and determine the current image obtained when the reference image replacement condition is met as a new reference image.

The preset node is a node that is preset in the image processing process. The preset node may be a time node in the image processing process, or a number node in the image processing process. For example, the preset node is an N-th second after the image processing is started or an N-th frame of image processed after the image processing is started. The preset node may be a node determined according to a user operation, or a node uniformly set by the computer device. The number of the preset node may be one or more. In a case that the number of the preset node is more than one, time intervals or number intervals between any two adjacent preset nodes in sequence may be the same or different.

**In** this embodiment, the reference image is flexibly replaced by setting the reference image replacement condition. In the case of a relatively large number of processed images, an error possibly caused due to calculating the image feature difference uniformly using the first frame of image including the face area can be avoided, thereby reducing an accumulated error, while improving a processing capability of a model when training data is limited.

**In** an embodiment, the feature point positioning method further includes: positioning the face area in the reference image; clipping a reference face image according to the face area positioned in the reference image; inputting the reference face image into a first image feature extraction model; obtaining a reference image feature outputted by the first image feature extraction model; and inputting the reference image feature into a feature point positioning model, to obtain a face feature point location in the reference image, that is, the target feature point location in the target area in the reference image.

The first image feature extraction model is a machine learning model that is trained in advance and that is used for performing image feature extraction according to a single frame of face image. The feature point positioning model is a machine learning model that is trained in advance and that is used for positioning a feature point according to an image feature of a single frame of image. Similarly, the first image feature extraction model and the feature point positioning model each may be a complex network model formed by interconnecting multiple layers. For description of the network model, reference may be made to the description in the foregoing embodiment. Details thereof are not described herein again.

It may be understood that the first image feature extraction model herein and the single-frame image feature extraction model in the foregoing embodiment may be the same machine learning model. An input of the machine learning model may be a face image directly clipped from an image according to a positioned face area, or may be an image pixel feature of a face area in an image. A type of input data during model use is the same as a type of model training input data selected during model training.

**In** an embodiment, the feature point positioning method further includes: determining a first confidence of the reference face image by a first target determining model according to the reference image feature; and in a case that the first confidence reaches a first preset confidence threshold, performing the step of inputting the reference image feature into a feature point positioning model, to obtain the face feature point in the reference image. Optionally, the feature point positioning method further includes: in a case that the first confidence does not reach the first preset confidence threshold, ending face feature point tracking and positioning.

The first target determining model is a machine learning model that is trained in advance and that is used for performing face image determining according to an image feature. Similarly, the first target determining model may be a complex network model formed by interconnecting multiple layers. For description of the network model, reference may be made to the description in the foregoing embodiment. Details thereof are not described herein again. In addition, the first target determining model may further include a classification layer by which a classification determining result and/or a confidence is outputted.

The confidence indicates a degree of credibility that an input image is a face image. A high confidence indicates a high probability that the input image is the face image. It may be understood that both the first confidence herein and a second confidence in subsequent embodiments are identification confidences, but respectively correspond to confidences under a condition of different target determining models and different input data.

For example, after determining the reference image, the computer device positions a face area in the reference image, and clips a reference face image according to the face area positioned in the reference image. Then, the computer device inputs the reference face image into the first image feature extraction model, and obtains a reference image feature outputted by the first image feature extraction model. The computer device inputs the reference image feature outputted by the first image feature extraction model into the first target determining model. If a first confidence outputted by the first target determining model reaches the first preset confidence threshold, that is, if it is further determined that the reference image includes the face area and it is necessary to perform face feature point positioning, the computer device inputs the reference image feature outputted by the first image feature extraction model into the feature point positioning model, so that the feature point positioning model outputs the face feature point location in the reference face image If the first confidence outputted by the first target determining model does not reach the first preset confidence threshold, that is, if it is determined that the reference image does not include the face area and it is unnecessary to perform the face feature point positioning, the computer device ends the face feature point tracking and positioning. The first preset confidence threshold may be set as 0.5.

The reference image feature outputted by the first image feature extraction model may be inputted into the feature point positioning model and the first target determining model at the same time. In this case, if the first confidence outputted by the first target determining model reaches the first preset confidence threshold, that is, if it is further determined that the reference image includes the face area, the steps S202 to S208 in the foregoing embodiments may be performed on a subsequently obtained image. If the first confidence outputted by the first target determining model does not reach the first preset confidence threshold, that is, if it is determined that the reference image does not include the face area, the reference image is required to be re-determined.

**In** an embodiment, the feature point positioning method further includes: training the first image feature extraction model, the feature point positioning model, and the first target determining model.

For example, the computer device may collect an image sample including a face area. The computer device clips a face image sample from the image sample as model training input data, and marks a face feature point in the face image sample as a model training label, to train the first image feature extraction model and the feature point positioning model. Then, the computer device determines the face image sample as a positive sample and determines a non-face image sample as a negative sample to train the first target determining model. In the process that the first image feature extraction model and the feature point positioning model are trained, a model parameter of the first target determining model remains unchanged. In the process that the first target determining model is trained, model parameters of the first image feature extraction model and the feature point positioning model remain unchanged.

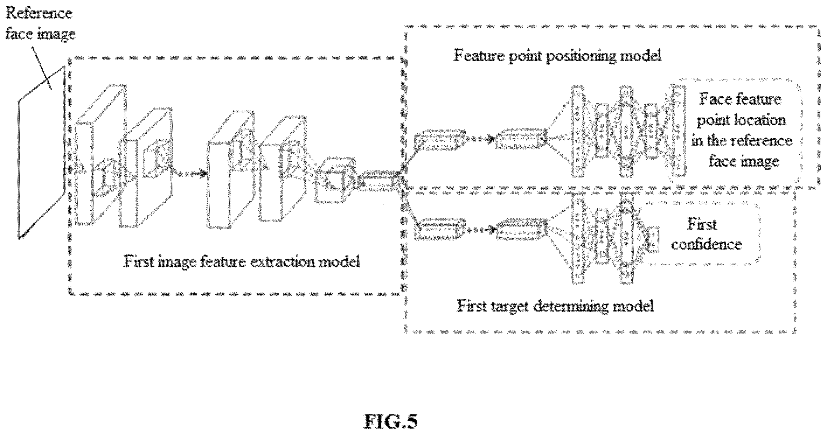

FIG. 5 is a schematic diagram showing a connection between models in a feature point positioning method according to an embodiment. As shown in FIG. 5, a first image feature extraction model, a feature point positioning model, and a first target determining model are shown. The feature point positioning model and the first target determining model each are cascaded with the first image feature extraction model. The models shown in the figure are used for processing a reference image. For use and training processes of the models shown in FIG. 5, reference may be made to the descriptions in the foregoing embodiments. It may be understood that, internal structures of the models shown in FIG. 5 are only used as an example for description. The internal structures of the models in the embodiments of the present disclosure are not limited thereto. In an actual scenario, the internal structures of the models may include more or fewer layers than those shown in FIG. 5.

**In** the foregoing embodiments, a method dedicated to positioning a feature point in a reference image is provided. Since the reference image has no image that may be used for reference, the feature point cannot be positioned according to an image feature difference between the current image and an image used as a reference. In this case, the feature point is positioned according to the reference image itself by another model, to ensure that the feature point in the reference image can be smoothly positioned.

**In** an embodiment, the feature point positioning method further includes: determining a second confidence of the target area by a second target determining model according to the image feature difference; and in a case that the second confidence reaches a second preset confidence threshold, performing the step of determining a target feature point location difference between the target area in the reference image and the target area in the current image by a feature point location difference determining model according to the image feature difference. Optionally, the feature point positioning method further includes::in a case that the second confidence does not reach the second preset confidence threshold, ending the target feature point tracking and positioning.

The second target determining model is a machine learning model that is trained in advance and that is used for performing target determining according to an image feature difference between two frames of images. Similarly, the second target determining model may be a complex network model formed by interconnecting multiple layers. For description of the network model, reference may be made to the description in the foregoing embodiment. Details thereof are not described herein again. In addition, the second target determining model may further include a classification layer by which a classification determining result and/or a confidence is outputted.

For example, after determining the image feature difference between the target area in the reference image and the target area in the current image, the computer device inputs the image feature difference into the second target determining model. If a second confidence outputted by the second target determining model reaches a second preset confidence threshold, that is, if it is further determined that the current image includes the target area and it is necessary to perform target feature point positioning, the computer device inputs the image feature difference into the feature point location difference determining model, so that the feature point location difference determining model outputs the target feature point location difference, to subsequently position the target feature point in the current image. If the second confidence outputted by the second target determining model does not reach the second preset confidence threshold, that is, if it is determined that the current image does not include the target area and it is unnecessary to perform the target feature point tracking and positioning, the computer device ends the target feature point tracking and positioning. For example, the second preset confidence threshold may be set as 0.5.

The image feature difference may be obtained by the second image feature extraction model. The computer device may determine the image pixel difference between the target area in the reference image and the target area in the current image, and input the image pixel difference into the second image feature extraction model, to output the image feature difference as inputs of the feature point location difference determining model and the second target determining model.

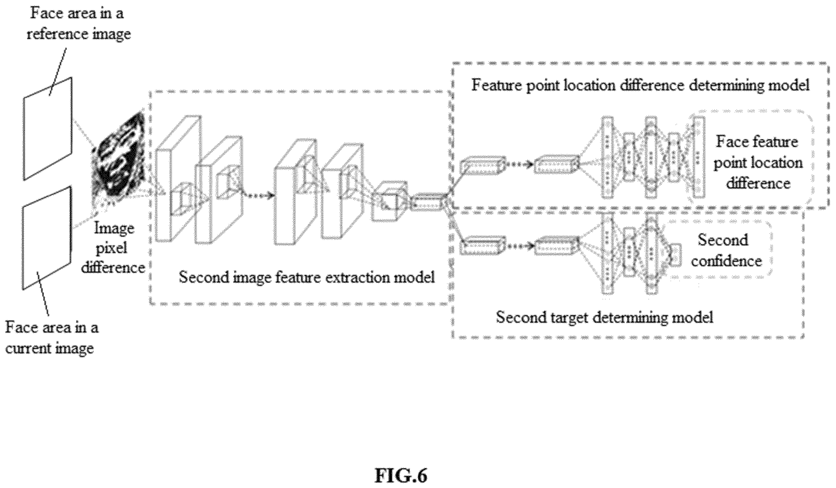

FIG. 6 is a schematic diagram showing a connection between models in a feature point positioning method according to an embodiment. As shown in FIG. 6, a second image feature extraction model, a feature point location difference determining model, and a second target determining model are shown. The feature point location difference determining model and the second target determining model each are cascaded with the second image feature extraction model. The models shown in the figure are used for processing a non-reference image. For use and training processes of the models shown in FIG. 6, reference may be made to the descriptions in the foregoing or following embodiments. It may be understood that, internal structures of the models shown in FIG. 6 are only used as an example for description. The internal structures of the models in the embodiments of the present disclosure are not limited thereto. In an actual scenario, the internal structures of the models may include more or fewer layers than those shown in FIG. 6.

**In** this embodiment, after the image feature difference is obtained, whether the current image includes the target area is determined again by the second target determining model. The target feature point positioning is performed on the target area only when it is determined again that the current image includes the target area, to avoid a waste of computing resources.

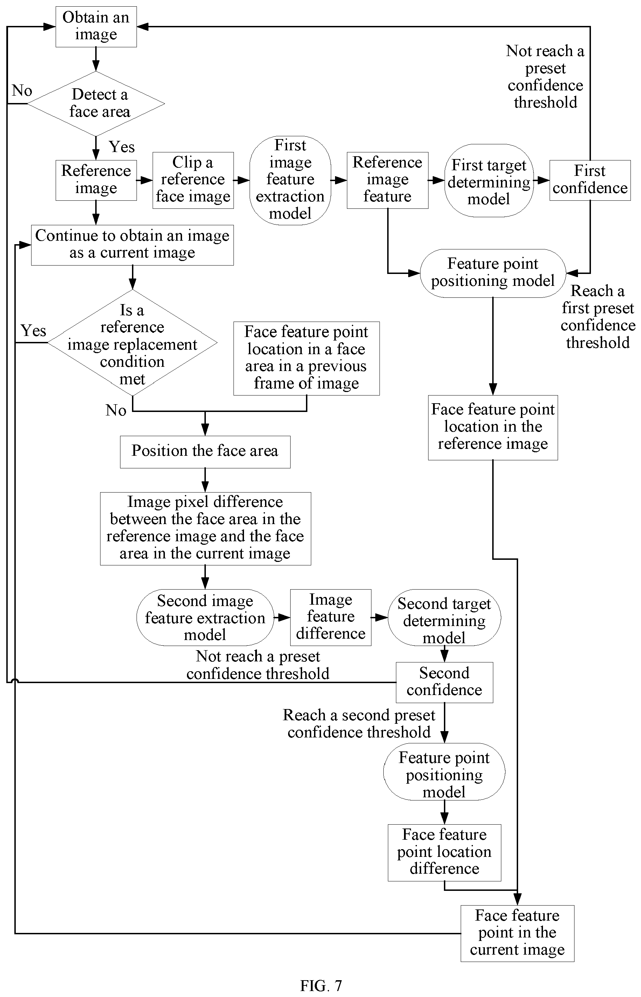

FIG. 7 is a schematic flowchart showing a feature point positioning process according to an embodiment. In this embodiment, the terminal is a terminal, the target area is a face area, and the target feature point is a face feature point. Referring to FIG. 7, the terminal acquires an image through a built-in or externally connected camera, and obtains the acquired image according to an acquisition time sequence. In this way, each time obtaining a frame of image, the terminal detects a face area in the obtained image. If the terminal does not detect the face area in the obtained image, the terminal continues to obtain a next frame of image for performing face detection. If the terminal detects the face area in the obtained image, the terminal determines the image in which the face area is detected as a reference image.

After determining the reference image, the terminal may position a face area in the reference image, and clip a reference face image according to the face area positioned in the reference image. The terminal inputs the reference face image into a first image feature extraction model. The terminal may continue to input a reference image feature outputted by the first image feature extraction model into a first target determining model, so that the first target determining model outputs a first confidence that the reference image includes the face area.

**In** a case that the first confidence reaches a first preset confidence threshold, the terminal inputs the reference image feature outputted by the first image feature extraction model into a feature point positioning model, so that the feature point positioning model outputs a face feature point location in the reference image, which is recorded for subsequent use. In a case that the first confidence does not reach the first preset confidence threshold, the terminal ends face feature point tracking and positioning, and the terminal continues to obtain a next frame of image for performing face detection, to re-determine a reference image.

After determining the reference image, the terminal continues to obtain a next frame of image as a current image, and queries a face feature point location in a face area in a previous frame of image of the current image. The terminal determines a face preselection area in the current image according to the queried face feature point location, and expands the face preselection area in the current image according to a preset multiple, to obtain a face area. The terminal subsequently calculates an image pixel difference between the face area in the reference image and the face area in the current image, and inputs the image pixel difference into a second image feature extraction model.

The terminal may input an image feature difference outputted by the second image feature extraction model into a second target determining model, so that the second target determining model outputs a second confidence that the current image includes the face area. In a case that the second confidence reaches a second preset confidence threshold, the terminal inputs the image feature difference outputted by the second image feature extraction model into a feature point location difference determining model, so that the feature point location difference determining model outputs a face feature point location difference between the reference image and the current image. In a case that the second confidence does not reach the second preset confidence threshold, the terminal ends the face feature point tracking and positioning, and the terminal continues to obtain a next frame of image for performing face detection, to re-determine a reference image.

After obtaining the face feature point location difference between the reference image and the current image, the terminal queries the face feature point location in the reference image that is recorded in advance, to position a face feature point in the face area in the current image. In this way, the terminal may add an additional element to the current image according to the face feature point positioned in the face area in the current image, and continue to obtain a next frame of image as a current image to process the current image.

In the process of continuing to obtain the image as the current image to process the current image, the terminal may query a reference image replacement condition, and determine a current image obtained when the reference image replacement condition is met as a new reference image. The terminal re-records a face feature point location in the new reference image for subsequent use.

In an embodiment, the feature point positioning method further includes: obtaining training sample images; positioning a sample target area in each of the training sample images; determining a sample target feature point location in the sample target area in the training sample image; determining sample target feature point location differences between every two of the training sample images; and training the feature point location difference determining model with a sample image feature difference between sample target areas respectively in any two frames of training sample images as model training input data, and with a sample target feature point location difference between the any two frames of training sample images as a training label.

The training sample image is an image from which the model training data originates. If an image includes a target, the image may be selected as the training sample image. The sample target area is a target area used as a sample.

For example, the computer device may collect multiple frames of images including a target as training sample images. The computer device positions sample target areas respectively in the training sample images, and determine sample target feature point locations respectively in the sample target areas in the training sample images, to determine sample target feature point location differences between every two of the training sample images. In this way, to implement that image information of the multiple frames of images is considered in the feature point positioning, the computer device may train the feature point location difference determining model by taking a sample image feature difference between sample target areas respectively in any two frames of training sample images as model training input data, and taking a sample target feature point location difference between the two frames of training sample images as a training label.

In an embodiment, targets in two frames of training sample images from which a sample target feature point location difference originates belong to the same object. For example, if the target is a face, faces in the two frames of training sample images belong to the same object, for example, the same natural person.

The sample image feature difference between the sample target areas respectively in the two frames of training sample images may be obtained by a machine learning model, or may be obtained through calculation after the computer device extracts sample image features respectively from the sample target areas in the two frames of training sample images by a feature extraction algorithm. For example, in the case that the target area is a face area, the computer device may extract a face feature by a face feature extraction algorithm. The face feature may be a Haar feature, or the like.

In an embodiment, the process of training the feature point location difference determining model with the sample image feature difference between sample target areas respectively in any two frames of training sample images as model training input data, and with a sample target feature point location difference between the two frames of training sample images as a training label may be performed by: determining a sample image pixel difference between the sample target areas respectively in the two frames of training sample images as model training input data of a second image feature extraction model; determining an output of the second image feature extraction model as an input of the feature point location difference determining model, where the output of the second image feature extraction model is the sample image feature difference between the sample target areas respectively in the two frames of training sample images; and training the second image feature extraction model and the feature point location difference determining model with the sample target feature point location difference between the two frames of training sample images as the training label.

For example, the second image feature extraction model and the feature point location difference determining model are trained together, and the output of the second image feature extraction model is the input of the feature point location difference determining model. To implement that image information of the multiple frames of images is considered in the feature point positioning, the computer device may determine a sample image pixel difference between sample target areas respectively in any two frames of training sample images as an input of the second image feature extraction model, and determine a sample target feature point location difference between the two frames of training sample images as an expected output of the feature point location difference determining model. The process of training the second image feature extraction model and the feature point location difference determining model is a process of minimizing a difference between an actual output and the expected output of the feature point location difference determining model.

In the process that the second image feature extraction model and the feature point location difference determining model are trained, a loss function is indicated by L1, and the L1 may be a Euclidean loss function. The L1 is expressed as the following formula: $L 1 = \frac{1}{2 N} {\sum }_{i = 1}^{N} {\left‖{\hat{y}}_{i}-{y}_{i}\right‖}_{2}^{2}$ (1) where ŷ*ᵢ* represents an expected output (a model training label), *yᵢ* represents an actual output, and N represents the number of samples. A small loss value of the loss function indicates high accuracy of an output result of the model. Training the second image feature extraction model and the feature point location difference determining model is adjusting model parameters of the second image feature extraction model and the feature point location difference determining model, to minimize the L1.

In an embodiment, the feature point positioning method further includes: determining the sample image pixel difference between the sample target areas respectively in the two frames of training sample images as positive sample data; determining a sample image pixel difference between a sample target area in the training sample image and a non-sample target area as negative sample data; and training the second target determining model according to the positive sample data and the negative sample data.

An image in which the non-sample target area is located is a sample image that does not include a target area. In this embodiment, the second target determining model is trained by taking the sample image pixel difference between the sample target areas respectively in the two frames of training sample images as the positive sample data, and taking the sample image pixel difference between the sample target area in the training sample image and the non-sample target area as the negative sample data. In the process that the second target determining model is trained, the model parameters of the second image feature extraction model and the feature point location difference determining model are fixed. Similarly, in the process that the second image feature extraction model and the feature point location difference determining model are trained, the model parameter of the second target determining model is fixed.

In the process that the second target determining model is trained, a loss function is indicated by L2, and the L2 may be a normalized logarithmic loss function (Softmax Loss). The L2 is expressed as the following formula: $L 2 = - {\sum }_{j = 1}^{T} {y}_{j} log {s}_{j}$ (2) where T represents the number of preset prediction classifications, and ${s}_{{j}_{{s}_{j}}}$ represents a probability of belonging to a j-th preset prediction classification. A small loss value of the loss function indicates high accuracy of an output result of the second target determining model. In this embodiment, the second target determining model is a binary classification model. Training the second target determining model is adjusting the model parameter of the second target determining model, to minimize the L2.

In an embodiment, the target area is a face area, and the target feature point is a face feature point. The computer device may obtain multiple frames of face images of multiple objects. Coordinates of face key points are marked in the face images. In this way, the computer device may obtain multiple sets of data ( ${I}_{j}^{i} , {X}_{j}^{i}$) for each object, where ${I}_{j}^{i}$ indicates an image pixel feature of a j-th frame of face image of an i-th object, and ${X}_{j}^{i}$ indicates a face feature point location of the j-th frame of face image of the i-th object.

For the data ( ${I}_{j}^{i} , {X}_{j}^{i}$) of each object, the computer device may perform random pairing, to generate an image pixel difference ${I}_{j 0}^{i} - {I}_{j 1}^{i}$, as model input data of the second image feature extraction model, and determine a face feature point location difference ${X}_{j 0}^{i} - {X}_{j 1}^{i}$ between two frames of images from which ${I}_{j 0}^{i} - {I}_{j 1}^{i}$ originates as an expected output of the feature point location difference determining model, to train the second image feature extraction model and the feature point location difference determining model. In this case, the model parameter of the second target determining model remains unchanged.

Further, the computer device determines the image pixel difference ${I}_{j 0}^{i} - {I}_{j 1}^{i}$ generated by the random pairing as positive sample model training input data of the second image feature extraction model, and determines ${I}_{j 0}^{i} - M$ as negative sample model training input data of the second image feature extraction model, to train the second target determining model, where M indicates an image pixel feature of a non-face area. In this case, the model parameters of the second image feature extraction model and the feature point location difference determining model remain unchanged.

In the foregoing embodiments, the model is trained by taking an image pixel difference between two frames of images as model training output data and taking a target feature point location difference between the two frames of images as a training target, rather than only depending on a single frame of image, so that the model learns to obtain intended data from image information of the two frames of images. In this way, in the process that the target feature point is positioned for the current image by a trained model, final feature point positioning is performed with reference to image information of a processed image and according to a target feature point difference between images, improving accuracy of feature point positioning. In addition, by repeatedly using the image information of the processed image, a sudden change in the location of the same feature point between different frames of images can be smoothed, thereby avoiding jitter of the feature point to a great extent, compared with a case that a feature point is positioned only according to the current image.

It is to be understood that, although the steps in the flowcharts of the foregoing embodiments are sequentially shown according to the indication of arrows, the steps are not necessarily sequentially performed according to the sequence indicated by the arrows. Unless explicitly specified in the present disclosure, the sequence of the steps is not strictly limited, and the steps may be performed in other sequences. Moreover, at least some of the steps in the foregoing embodiments may include multiple sub-steps or multiple stages. The sub-steps or stages are not necessarily performed at the same time instant but may be performed at different time instants. The sub-steps or stages are not necessarily performed sequentially, but may be performed in turn or alternately with other steps or at least some sub-steps or stages of other steps.

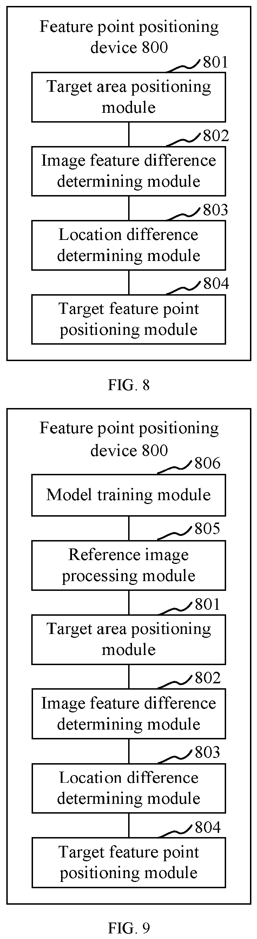

As shown in FIG. 8, a computer device 800 is provided in an embodiment. Referring to FIG. 8, the computer device 800 includes: a target area positioning module 801, an image feature difference determining module 802, a location difference determining module 803, and a target feature point positioning module 804.

The target area positioning module 801 is configured to position a target area in a current image.

The image feature difference determining module 802 is configured to determine an image feature difference between a target area in a reference image and the target area in the current image. The reference image is a frame of image that is processed before the current image and that includes the target area.

The location difference determining module 803 is configured to determine a target feature point location difference between the target area in the reference image and the target area in the current image by a feature point location difference determining model according to the image feature difference.

The target feature point positioning module 804 is configured to position a target feature point in the target area in the current image according to a target feature point location in the target area in the reference image and the target feature point location difference.

**In** an embodiment, the target area is a face area, and the target feature point is a face feature point. The computer device 800 further includes: a reference image processing module 805. The reference image processing module 805 is configured to: obtain an image according to a time sequence; detect a face area in the obtained image; in a case that the face area is detected in the obtained image, determine the image in which the face area is detected as the reference image; and after the reference image is determined, determine an image that is obtained next as the current image.

**In** an embodiment, the reference image processing module 805 is further configured to: query a reference image replacement condition; and in a case that the image that is obtained next is determined as the current image, determine the current image obtained in a case that the reference image replacement condition is met as a new reference image.

**In** an embodiment, the reference image processing module 805 is further configured to: position the face area in the reference image; clip a reference face image according to the face area positioned in the reference image; input the reference face image into a first image feature extraction model; obtain a reference image feature outputted by the first image feature extraction model; and input the reference image feature into a feature point positioning model, to obtain a target feature point location in the target area in the reference image.

**In** an embodiment, the reference image processing module 805 is further configured to: determine a first confidence of the reference face image by a first target determining model according to the reference image feature; and in a case that the first confidence reaches a first preset confidence threshold, perform the operation of inputting the reference image feature into a feature point positioning model, to obtain the target feature point location in the target area in the reference image. Optionally, the reference image processing module 805 is further configured to: in a case that the first confidence does not reach the first preset confidence threshold, end face feature point tracking and positioning.

**In** an embodiment, the target area positioning module 801 is further configured to: query a target feature point location in a target area in a previous frame of image of the current image; determine a target preselection area in the current image according to the queried target feature point location in the target area in the previous frame of image; and expand the target preselection area in the current image according to a preset multiple, to obtain the target area in the current image.

**In** an embodiment, the image feature difference determining module 802 is further configured to: calculate an image pixel difference between the target area in the reference image and the target area in the current image; input the image pixel difference into a second image feature extraction model; and obtain the image feature difference outputted by the second image feature extraction model.

**In** an embodiment, the location difference determining module 803 is further configured to: determine a second confidence of the target area by a second target determining model according to the image feature difference; in a case that the second confidence reaches a second preset confidence threshold, determine a target feature point location difference between the target area in the reference image and the target area in the current image by a feature point location difference determining model according to the image feature difference; and in a case that the second confidence does not reach the second preset confidence threshold, end target feature point tracking and positioning.

As shown in FIG. 9, in an embodiment, the computer device 800 further includes the reference image processing module 805 and a model training module 806.

The model training module 806 is configured to: obtain training sample images; position a sample target area in each of the training sample images; determine a sample target feature point location in the sample target area in the training sample image; determine sample target feature point location differences between every two of the training sample images; and train the feature point location difference determining model with a sample image feature difference between sample target areas respectively in two frames of training sample images as model training input data, and with a sample target feature point location difference between the two frames of training sample images as a training label.

In an embodiment, the model training module 806 is further configured to: determine a sample image pixel difference between the sample target areas respectively in the two frames of training sample images as model training input data of a second image feature extraction model; determine an output of the second image feature extraction model as an input of the feature point location difference determining model, where the output of the second image feature extraction model is the sample image feature difference between the sample target areas respectively in the two frames of training sample images; and train the second image feature extraction model and the feature point location difference determining model with the sample target feature point location difference between the two frames of training sample images as the training label.

In an embodiment, the model training module 806 is further configured to: determine the sample image pixel difference between the sample target areas respectively in the two frames of training sample images as positive sample data; determine a sample image pixel difference between a sample target area in the training sample image and a non-sample target area as negative sample data; and train the second target determining model according to the positive sample data and the negative sample data.

In an embodiment, the target feature point positioning module 804 is further configured to add an additional element to the current image according to the target feature point positioned in the target area in the current image.

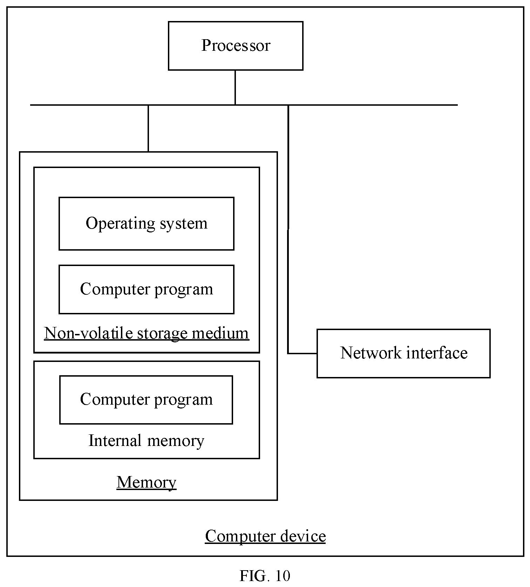

FIG. 10 is a diagram showing an internal structure of a computer device according to an embodiment. The computer device may be the terminal 110 or the server 120 in FIG. 1. As shown in FIG. 10, the computer device includes a processor, memories, and a network interface that are connected to each other via a system bus. The memories include a non-volatile storage medium and an internal memory. The non-volatile storage medium in the computer device stores an operating system and may further store a computer program. The computer program, when executed by the processor, may cause the processor to implement the feature point positioning method. The internal memory may also store a computer program. The computer program, when executed by the processor, may cause the processor to perform the feature point positioning method. A person skilled in the art may understand that, the structure shown in FIG. 10 is only a block diagram of a partial structure related to the solution in the present disclosure, and does not constitute a limitation to the computer device to which the solution of the present disclosure is applied. The computer device may include more components or fewer components than those shown in the figure, or some components may be combined, or a different component deployment may be used.

In an embodiment, the computer device provided in the present disclosure may be implemented as a device for executing a computer program. The computer program may run on the computer device shown in FIG. 10. The non-volatile storage medium of the computer device may store program modules such as the target area positioning module 801, the image feature difference determining module 802, the location difference determining module 803, and the target feature point positioning module 804 shown in FIG. 8. A computer program formed by the program modules causes the processor to perform the steps in the feature point positioning method according to the embodiments of the present disclosure described in this specification.

For example, the computer device shown in FIG. 10 may position a target area in a current image by the target area positioning module 801 shown in FIG. 8. The computer device may determine an image feature difference between a target area in a reference image and the target area in the current image by the image feature difference determining module 802, where the reference image is a frame of image that is processed before the current image and that includes the target area. The computer device may determine a target feature point location difference between the target area in the reference image and the target area in the current image by a feature point location difference determining model according to the image feature difference by the location difference determining module 803. The computer device may position a target feature point in the target area in the current image according to a target feature point location in the target area in the reference image and the target feature point location difference by the target feature point positioning module 804.

A computer-readable storage medium is provided according to an embodiment. The computer-readable storage medium stores a computer program. The computer program, when executed by a processor, causes the processor to perform the following steps of: positioning a target area in a current image; determining an image feature difference between a target area in a reference image and the target area in the current image, the reference image being a frame of image that is processed before the current image and that includes the target area; determining a target feature point location difference between the target area in the reference image and the target area in the current image by a feature point location difference determining model according to the image feature difference; and positioning a target feature point in the target area in the current image according to a target feature point location in the target area in the reference image and the target feature point location difference.

**In** an embodiment, the target area is a face area, and the target feature point is a face feature point. The computer program further causes the processor to perform the following steps of: obtaining an image according to a time sequence; detecting a face area in the obtained image; determining, in a case that the face area is detected in the obtained image, the image in which the face area is detected as the reference image; and determining, after the reference image is determined, an image that is obtained next as the current image.

**In** an embodiment, the computer program further causes the processor to perform the following steps of: querying a reference image replacement condition; and determining, in a case that the image that is obtained next is determined as the current image, the current image obtained in a case that the reference image replacement condition is met as a new reference image.

**In** an embodiment, the computer program further causes the processor to perform the following steps of: positioning the face area in the reference image; clipping a reference face image according to the face area positioned in the reference image; inputting the reference face image into a first image feature extraction model; obtaining a reference image feature outputted by the first image feature extraction model; and inputting the reference image feature into a feature point positioning model, to obtain a face feature point location in the reference image.

**In** an embodiment, the computer program further causes the processor to perform the following steps of: determining a first confidence of the reference face image by a first target determining model according to the reference image feature; in a case that the first confidence reaches a first preset confidence threshold, performing the step of inputting the reference image feature into a feature point positioning model, to obtain the face feature point in the reference image; and in a case that the first confidence does not reach the first preset confidence threshold, ending face feature point tracking and positioning.

**In** an embodiment, the positioning a target area in a current image includes: querying a target feature point location in a target area in a previous frame of image of the current image; determining a target preselection area in the current image according to the queried target feature point location; and expanding the target preselection area in the current image according to a preset multiple, to obtain the target area.

**In** an embodiment, the determining an image feature difference between a target area in a reference image and the target area in the current image includes: calculating an image pixel difference between the target area in the reference image and the target area in the current image; inputting the image pixel difference into a second image feature extraction model; and obtaining the image feature difference outputted by the second image feature extraction model.

**In** an embodiment, the computer program further causes the processor to perform the following steps of: determining a second confidence of the target area by a second target determining model according to the image feature difference; in a case that the second confidence reaches a second preset confidence threshold, performing the step of determining a target feature point location difference between the target area in the reference image and the target area in the current image by a feature point location difference determining model according to the image feature difference; and in a case that the second confidence does not reach the second preset confidence threshold, ending target feature point tracking and positioning.

**In** an embodiment, the computer program further causes the processor to perform the following steps of: obtaining training sample images; positioning a sample target area in each of the training sample images; determining a sample target feature point location in the sample target area in the training sample image; determining sample target feature point location differences between every two of the training sample images; and training the feature point location difference determining model with a sample image feature difference between sample target areas respectively in two frames of training sample images as model training input data, and with a sample target feature point location difference between the two frames of training sample images as a training label,.

**In** an embodiment, the training the feature point location difference determining model with a sample image feature difference between sample target areas respectively in two frames of training sample images as model training input data, and with a sample target feature point location difference between the two frames of training sample images as a training label includes: determining a sample image pixel difference between the sample target areas respectively in the two frames of training sample images as model training input data of a second image feature extraction model; determining an output of the second image feature extraction model as an input of the feature point location difference determining model, the output of the second image feature extraction model being the sample image feature difference between the sample target areas respectively in the two frames of training sample images; and training the second image feature extraction model and the feature point location difference determining model with the sample target feature point location difference between the two frames of training sample images as the training label.

**In** an embodiment, the computer program further causes the processor to perform the following steps of: determining the sample image pixel difference between the sample target areas respectively in the two frames of training sample images as positive sample data; determining a sample image pixel difference between a sample target area in the training sample image and a non-sample target area as negative sample data; and training the second target determining model according to the positive sample data and the negative sample data.

**In** an embodiment, the computer program further causes the processor to perform the following steps of: adding an additional element to the current image according to the target feature point positioned in the target area in the current image.

A computer device is provided according to an embodiment. The computer device includes a memory and a processor. The memory stores a computer program. the computer program, when executed by the processor, causes the processor to perform the following steps of: positioning a target area in a current image; determining an image feature difference between a target area in a reference image and the target area in the current image, the reference image being a frame of image that is processed before the current image and that includes the target area; determining a target feature point location difference between the target area in the reference image and the target area in the current image by a feature point location difference determining model according to the image feature difference; and positioning a target feature point in the target area in the current image according to a target feature point location in the target area in the reference image and the target feature point location difference.

**In** an embodiment, the target area is a face area, and the target feature point is a face feature point. The computer program further causes the processor to perform the following steps of: obtaining an image according to a time sequence; detecting a face area in the obtained image; determining, in a case that the face area is detected in the obtained image, the image in which the face area is detected as the reference image; and determining, after the reference image is determined, an image that is obtained next as the current image.

**In** an embodiment, the computer program further causes the processor to perform the following steps of: querying a reference image replacement condition; and determining, in a case that the image that is obtained next is determined as the current image, the current image obtained in a case that the reference image replacement condition is met as a new reference image.

**In** an embodiment, the computer program further causes the processor to perform the following steps of: positioning the face area in the reference image; clipping a reference face image according to the face area positioned in the reference image; inputting the reference face image into a first image feature extraction model; obtaining a reference image feature outputted by the first image feature extraction model; and inputting the reference image feature into a feature point positioning model, to obtain a face feature point location in the reference image.

**In** an embodiment, the computer program further causes the processor to perform the following steps of: determining a first confidence of the reference face image by a first target determining model according to the reference image feature; in a case that the first confidence reaches a first preset confidence threshold, performing the step of inputting the reference image feature into a feature point positioning model, to obtain the face feature point of the reference image; and in a case that the first confidence does not reach the first preset confidence threshold, ending face feature point tracking and positioning.

**In** an embodiment, the positioning a target area in a current image includes: querying a target feature point location in a target area in a previous frame of image of the current image; determining a target preselection area in the current image according to the queried target feature point location; and expanding the target preselection area in the current image according to a preset multiple, to obtain the target area.

**In** an embodiment, the determining an image feature difference between a target area in a reference image and the target area in the current image includes: calculating an image pixel difference between the target area in the reference image and the target area in the current image; inputting the image pixel difference into a second image feature extraction model; and obtaining the image feature difference outputted by the second image feature extraction model.

**In** an embodiment, the computer program further causes the processor to perform the following steps of: determining a second confidence of the target area by a second target determining model according to the image feature difference; in a case that the second confidence reaches a second preset confidence threshold, performing the step of determining a target feature point location difference between the target area in the reference image and the target area in the current image by a feature point location difference determining model according to the image feature difference; and in a case that the second confidence does not reach the second preset confidence threshold, ending target feature point tracking and positioning.

**In** an embodiment, the computer program further causes the processor to perform the following steps of: obtaining training sample images; positioning a sample target area in each of the training sample images; determining a sample target feature point location in the sample target area in the training sample image; determining sample target feature point location differences between every two of the training sample images; and training the feature point location difference determining model with a sample image feature difference between sample target areas respectively in two frames of training sample images as model training input data, and with a sample target feature point location difference between the two frames of training sample images as a training label.

**In** an embodiment, the training the feature point location difference determining model with a sample image feature difference between sample target areas respectively in two frames of training sample images as model training input data, and with a sample target feature point location difference between the two frames of training sample images as a training label includes: determining a sample image pixel difference between the sample target areas respectively in the two frames of training sample images as model training input data of a second image feature extraction model; determining an output of the second image feature extraction model as an input of the feature point location difference determining model, the output of the second image feature extraction model being the sample image feature difference between the sample target areas respectively in the two frames of training sample images; and training the second image feature extraction model and the feature point location difference determining model with the sample target feature point location difference between the two frames of training sample images as the training label.

In an embodiment, the computer program further causes the processor to perform the following steps of: determining the sample image pixel difference between the sample target areas respectively in the two frames of training sample images as positive sample data; determining a sample image pixel difference between a sample target area in the training sample image and a non-sample target area as negative sample data; and training the second target determining model according to the positive sample data and the negative sample data.

In an embodiment, the computer program further causes the processor to perform the following steps of: adding an additional element to the current image according to the target feature point positioned in the target area in the current image.

A person of ordinary skill in the art may understand that all or some of the processes in the foregoing method embodiments may be implemented by a computer program instructing related hardware. The program may be stored in a non-volatile computer-readable storage medium. The program, when executed, may include the processes of the foregoing method embodiments. Any reference to a memory, a storage, a database, or other medium used in the embodiments provided in the present disclosure may include a non-volatile and/or volatile memory. The non-volatile memory may include a read-only memory (ROM), a programmable ROM (PROM), an electrically programmable ROM (EPROM), an electrically erasable programmable ROM (EEPROM), or a flash. The volatile memory may include a random access memory (RAM) or an external cache. As an illustration instead of a limitation, the RAM may be implemented in various forms, such as a static RAM (SRAM), a dynamic RAM (DRAM), a synchronous DRAM (SDRAM), a double data rate SDRAM (DDRSDRAM), an enhanced SDRAM (ESDRAM), a Synchlink DRAM (SLDRAM), a rambus direct RAM (RDRAM), a direct rambus dynamic RAM (DRDRAM), and a rambus dynamic RAM (RDRAM).

The technical features in the foregoing embodiments may be randomly combined. To make the description concise, not all possible combinations of the technical features in the foregoing embodiments are described. However, combinations of the technical features shall all be considered as falling within the scope described in this specification provided that the combinations of the technical features do not conflict with each other.

The foregoing embodiments only show several implementations of the present disclosure and are described in detail, but are not construed as a limit to the patent scope of the present disclosure. It should be noted that, a person of ordinary skill in the art may further make variations and improvements without departing from the ideas of the present disclosure, which all fall within the protection scope of the present disclosure. Therefore, the protection scope of the present disclosure should be defined by the appended claims.

## Claims

1. A feature point positioning method, performed by a computer device, the method comprising:
positioning (S202) a target area in a current image using a target detection model, the target area in the current image being an area where a target feature point is located;
determining an image pixel difference between a target area in a reference image and the target area in the current image, the reference image being a frame of image that is processed before the current image and that includes the target area;
inputting (S204) the image pixel difference into an image feature extraction model to obtain an image feature difference between the target area in the reference image and the target area in the current image, wherein the image feature extraction model is a machine learning model that is trained in advance and that is used for performing image feature extraction according to an image pixel difference between target areas in two respective frames of images;
inputting (S206) the image feature difference into a feature point location difference determining model to obtain a target feature point location difference between a target feature point location in the target area in the reference image and the target feature point location in the target area in the current image, wherein the feature point location difference determining model is a machine learning model that is trained in advance and that is used for determining a feature point location difference according to an image feature difference between target areas in two respective frames of images; and
positioning (S208) a target feature point in the target area in the current image according to a target feature point location in the target area in the reference image and the target feature point location difference.

2. The method according to claim 1, wherein the target area is a face area, the target feature point is a face feature point, and the method further comprises:
obtaining an image according to a time sequence;
detecting a face area in the obtained image;
determining, in a case that the face area is detected in the obtained image, the image in which the face area is detected as the reference image; and
determining, after the reference image is determined, an image that is obtained next as the current image.

3. The method according to claim 2, further comprising:
querying a reference image replacement condition; and
determining, in a case that the image that is obtained next is determined as the current image, the current image obtained in a case that the reference image replacement condition is met as a new reference image.

4. The method according to claim 2, further comprising:
positioning the face area in the reference image;
clipping a reference face image according to the face area positioned in the reference image;
inputting the reference face image into a second image feature extraction model;
obtaining a reference image feature outputted by the second image feature extraction model; and
inputting the reference image feature into a feature point positioning model, to obtain the target feature point location in the target area in the reference image.

5. The method according to claim 4, further comprising:
determining a first confidence of the reference face image by a first target determining model according to the reference image feature; and
performing the step of inputting the reference image feature into a feature point positioning model, to obtain the target feature point in the target area in the reference image, in a case that the first confidence reaches a first preset confidence threshold.

6. The method according to claim 1, wherein the positioning a target area in a current image comprises:
querying a target feature point location in a target area in a previous frame of image of the current image;
determining a target preselection area in the current image according to the queried target feature point location in the target area in the previous frame of image, the target preselection area being a preselection area for determining the target area; and
expanding the target preselection area in the current image according to a preset multiple, to obtain the target area in the current image.

7. The method according to claim 1, further comprising:
determining a second confidence of the target area by a second target determining model according to the image feature difference; and
performing the step of determining a target feature point location difference between the target area in the reference image and the target area in the current image by a feature point location difference determining model according to the image feature difference, in a case that the second confidence reaches a second preset confidence threshold.

8. A computer device (800), comprising:
a target area detection module (801), configured to position a target area in a current image, the target area in the current image being an area where a target feature point is located;
an image feature difference determining module (802), configured to determine an image pixel difference between a target area in a reference image and the target area in the current image, the reference image being a frame of image that is processed before the current image and that includes the target area;
an image feature extraction model, configured to receive the image pixel difference and to obtain an image feature difference between the target area in a reference image and the target area in the current image, wherein the image feature extraction model is a machine learning model that is trained in advance and that is used for performing image feature extraction according to an image pixel difference between target areas in two respective frames of images;
a feature point location difference determining model (803), configured to receive the image feature difference and to obtain a target feature point location difference between a target feature point location in the target area in the reference image and the target feature point location in the target area in the current image, wherein the feature point location difference determining model is a machine learning model that is trained in advance and that is used for determining a feature point location difference according to an image feature difference between target areas in two respective frames of images; and
a target feature point positioning module (804), configured to position a target feature point in the target area in the current image according to a target feature point location in the target area in the reference image and the target feature point location difference.

9. The computer device according to claim 8, wherein the target area is a face area, the target feature point is a face feature point, and the computer device further comprises:
a reference image processing module (805), configured to: obtain an image according to a time sequence; detect a face area in the obtained image; in a case that the face area is detected in the obtained image, determine the image in which the face area is detected as the reference image; and determine, after the reference image is determined, an image that is obtained next as the current image.

10. The computer device according to claim 9, wherein the reference image processing module (805) is configured to: query a reference image replacement condition; and in a case that the image that is obtained next is determined as the current image, determine the current image obtained in a case that the reference image replacement condition is met as a new reference image.

11. The computer device according to claim 9, wherein the reference image processing module (805) is configured to: position the face area in the reference image; clip a reference face image according to the face area positioned in the reference image; input the reference face image into a second image feature extraction model; obtain a reference image feature outputted by the second image feature extraction model; and input the reference image feature into a feature point positioning model, to obtain a target feature point location in the target area in the reference image.

12. The computer device according to claim 9, wherein the target area positioning module (801) is configured to: query a target feature point location in a target area in a previous frame of image of the current image; determine a target preselection area in the current image according to the queried target feature point location in the target area in the previous frame of image; and expand the target preselection area in the current image according to a preset multiple, to obtain the target area in the current image.

13. A computer-readable storage medium, storing a computer program that, when executed by a processor, causes the processor to perform the steps of the method according to any of claims 1 to 7.

## Patentansprüche

1. Verfahren zur Positionierung eines Merkmalspunkts, ausgeführt durch eine Computervorrichtung, wobei das Verfahren umfasst:
Positionieren (S202) eines Zielbereichs in einem aktuellen Bild unter Verwendung eines Zielerkennungsmodells, wobei der Zielbereich in dem aktuellen Bild ein Bereich ist, in dem sich ein Zielmerkmalspunkt befindet;
Bestimmen einer Bildpixeldifferenz zwischen einem Zielbereich in einem Referenzbild und dem Zielbereich in dem aktuellen Bild, wobei das Referenzbild ein Einzelbild ist, das vor dem aktuellen Bild verarbeitet wird und das den Zielbereich umfasst;
Eingeben (S204) der Bildpixeldifferenz in ein Bildmerkmals-Extraktionsmodell, um eine Bildmerkmalsdifferenz zwischen dem Zielbereich in dem Referenzbild und dem Zielbereich in dem aktuellen Bild zu erhalten, wobei das Bildmerkmals-Extraktionsmodell ein Modell für maschinelles Lernen ist, das im Voraus trainiert wird und das zum Durchführen einer Bildmerkmals-Extraktion gemäß einer Bildpixeldifferenz zwischen Zielbereichen in zwei jeweiligen Einzelbildern verwendet wird;
Eingeben (S206) der Bildmerkmalsdifferenz in ein Modell zur Bestimmung einer Merkmalspunkt-Positionsdifferenz, um eine Zielmerkmalspunkt-Positionsdifferenz zwischen einer Zielmerkmalspunkt-Position in dem Zielbereich in dem Referenzbild und der Zielmerkmalspunkt-Position in dem Zielbereich in dem aktuellen Bild zu erhalten, wobei das Modell zur Bestimmung der Merkmalspunkt-Positionsdifferenz ein Modell für maschinelles Lernen ist, das im Voraus trainiert wird und das zum Bestimmen einer Merkmalspunkt-Positionsdifferenz gemäß einer Bildmerkmalsdifferenz zwischen Zielbereichen in zwei jeweiligen Einzelbildern verwendet wird; und
Positionieren (S208) eines Zielmerkmalspunkts in dem Zielbereich in dem aktuellen Bild gemäß einer Zielmerkmalspunkt-Position in dem Zielbereich in dem Referenzbild und der Zielmerkmalspunkt-Positionsdifferenz.

2. Verfahren nach Anspruch 1, wobei der Zielbereich ein Gesichtsbereich ist, der Zielmerkmalspunkt ein Gesichtsmerkmalspunkt ist, und das Verfahren ferner umfasst:
Erhalten eines Bildes gemäß einer Zeitsequenz;
Erkennen eines Gesichtsbereichs in dem erhaltenen Bild;
Bestimmen, in dem Fall, dass der Gesichtsbereich in dem erhaltenen Bild erkannt wird, des Bildes, in dem der Gesichtsbereich erkannt wird, als Referenzbild; und
Bestimmen, nachdem das Referenzbild bestimmt ist, eines Bildes, das als nächstes erhalten wird, als aktuelles Bild.

3. Verfahren nach Anspruch 2, ferner umfassend:
Abfragen einer Bedingung zum Ersetzen des Referenzbilds; und
Bestimmen, in dem Fall, dass das Bild, das als nächstes erhalten wird, als aktuelles Bild bestimmt wird, des aktuellen Bildes, das erhalten wird, in dem Fall, dass die Bedingung zum Ersetzen des Referenzbilds erfüllt ist, als neues Referenzbild.

4. Verfahren nach Anspruch 2, ferner umfassend:
Positionieren des Gesichtsbereichs in dem Referenzbild;
Ausschneiden eines Referenz-Gesichtsbilds gemäß dem in dem Referenzbild positionierten Gesichtsbereich;
Eingeben des Referenz-Gesichtsbilds in ein zweites Bildmerkmals-Extraktionsmodell;
Erhalten einer Referenz-Bildmerkmal, das von dem zweiten Bildmerkmals-Extraktionsmodell ausgegeben wird; und
Eingeben des Referenz-Bildmerkmals in ein Merkmalspunkt-Positionierungsmodell, um die Zielmerkmalspunkt-Position in dem Zielbereich in dem Referenzbild zu erhalten.

5. Verfahren nach Anspruch 4, ferner umfassend:
Bestimmen einer ersten Konfidenz des Referenz-Gesichtsbilds durch ein erstes Zielbestimmungsmodell gemäß dem Referenz-Bildmerkmal; und
Durchführen des Schritts des Eingebens des Referenz-Bildmerkmals in ein Merkmalspunkt-Positionierungsmodell, um den Zielmerkmalspunkt in dem Zielbereich in dem Referenzbild zu erhalten, in dem Fall, dass die erste Konfidenz einen ersten voreingestellten Konfidenzschwellenwert erreicht.

6. Verfahren nach Anspruch 1, wobei das Positionieren eines Zielbereichs in einem aktuellen Bild umfasst:
Abfragen einer Zielmerkmalspunkt-Position in einem Zielbereich in einem vorhergehenden Einzelbild des aktuellen Bildes;
Bestimmen eines Zielvorauswahlbereichs in dem aktuellen Bild gemäß der abgefragten Zielmerkmalspunkt-Position in dem Zielbereich in dem vorhergehenden Einzelbild, wobei der Zielvorauswahlbereich ein Vorauswahlbereich zum Bestimmen des Zielbereichs ist; und
Erweitern des Zielvorauswahlbereichs in dem aktuellen Bild gemäß einem voreingestellten Vielfachen, um den Zielbereich in dem aktuellen Bild zu erhalten.

7. Verfahren nach Anspruch 1, ferner umfassend:
Bestimmen einer zweiten Konfidenz des Zielbereichs durch ein zweites Zielbestimmungsmodell gemäß der Bildmerkmalsdifferenz; und
Durchführen des Schritts des Bestimmens einer Zielmerkmalspunkt-Positionsdifferenz zwischen dem Zielbereich in dem Referenzbild und dem Zielbereich in dem aktuellen Bild durch ein Modell zur Bestimmung einer Merkmalspunkt-Positionsdifferenz gemäß der Bildmerkmalsdifferenz, in dem Fall, dass die zweite Konfidenz einen zweiten voreingestellten Konfidenzschwellenwert erreicht.

8. Computervorrichtung (800), umfassend:
ein Zielbereichs-Erkennungsmodul (801), das konfiguriert ist, einen Zielbereich in einem aktuellen Bild zu positionieren, wobei der Zielbereich in dem aktuellen Bild ein Bereich ist, in dem sich ein Zielmerkmalspunkt befindet;
ein Modul zur Bestimmung der Bildmerkmalsdifferenz (802), das konfiguriert ist, eine Bildpixeldifferenz zwischen einem Zielbereich in einem Referenzbild und dem Zielbereich in dem aktuellen Bild zu bestimmen, wobei das Referenzbild ein Einzelbild ist, das vor dem aktuellen Bild verarbeitet wird und das den Zielbereich umfasst;
ein Bildmerkmals-Extraktionsmodell, das konfiguriert ist, die Bildpixeldifferenz zu empfangen und eine Bildmerkmalsdifferenz zwischen dem Zielbereich in einem Referenzbild und dem Zielbereich in dem aktuellen Bild zu erhalten, wobei das Bildmerkmals-Extraktionsmodell ein Modell für maschinelles Lernen ist, das im Voraus trainiert wird und das zum Durchführen einer Bildmerkmals-Extraktion gemäß einer Bildpixeldifferenz zwischen Zielbereichen in zwei jeweiligen Einzelbildern verwendet wird;
ein Modell zur Bestimmung einer Merkmalspunkt-Positionsdifferenz (803), das konfiguriert ist, die Bildmerkmalsdifferenz zu empfangen und eine Zielmerkmalspunkt-Positionsdifferenz zwischen einer Zielmerkmalspunkt-Position in dem Zielbereich in dem Referenzbild und der Zielmerkmalspunkt-Position in dem Zielbereich in dem aktuellen Bild zu erhalten, wobei das Modell zur Bestimmung der Merkmalspunkt-Positionsdifferenz ein Modell für maschinelles Lernen ist, das im Voraus trainiert wird und das zum Bestimmen einer Merkmalspunkt-Positionsdifferenz gemäß einer Bildmerkmalsdifferenz zwischen Zielbereichen in zwei jeweiligen Einzelbildern verwendet wird; und
ein Modul zur Positionierung des Zielmerkmalspunkts (804), das konfiguriert ist, einen Zielmerkmalspunkt in dem Zielbereich in dem aktuellen Bild gemäß einer Zielmerkmalspunkt-Position in dem Zielbereich in dem Referenzbild und der Zielmerkmalspunkt-Positionsdifferenz zu positionieren.

9. Computervorrichtung nach Anspruch 8, wobei der Zielbereich ein Gesichtsbereich ist, der Zielmerkmalspunkt ein Gesichtsmerkmalspunkt ist, und die Computervorrichtung ferner umfasst:
ein Referenzbild-Verarbeitungsmodul (805), das konfiguriert ist zum: Erhalten eines Bildes gemäß einer Zeitsequenz; Erkennen eines Gesichtsbereichs in dem erhaltenen Bild; in dem Fall, dass der Gesichtsbereich in dem erhaltenen Bild erkannt wird, Bestimmen des Bildes, in dem der Gesichtsbereich erkannt wird, als Referenzbild; und Bestimmen, nachdem das Referenzbild bestimmt ist, eines Bildes, das als nächstes erhalten wird, als aktuelles Bild.

10. Computervorrichtung nach Anspruch 9, wobei das Referenzbild-Verarbeitungsmodul (805) konfiguriert ist zum: Abfragen einer Bedingung zum Ersetzen des Referenzbilds; und in dem Fall, dass das Bild, das als nächstes erhalten wird, als aktuelles Bild bestimmt wird, Bestimmen des aktuellen Bildes, das erhalten wird, in dem Fall, dass die Bedingung zum Ersetzen des Referenzbilds erfüllt ist, als neues Referenzbild.

11. Computervorrichtung nach Anspruch 9, wobei das Referenzbild-Verarbeitungsmodul (805) konfiguriert ist zum: Positionieren des Gesichtsbereichs in dem Referenzbild; Ausschneiden eines Referenz-Gesichtsbilds gemäß dem in dem Referenzbild positionierten Gesichtsbereich; Eingeben des Referenz-Gesichtsbilds in ein zweites Bildmerkmals-Extraktionsmodell; Erhalten eines Referenz-Bildmerkmals, das von dem zweiten Bildmerkmals-Extraktionsmodell ausgegeben wird; und Eingeben des Referenz-Bildmerkmals in ein Merkmalspunkt-Positionierungsmodell, um eine Zielmerkmalspunkt-Position in dem Zielbereich in dem Referenzbild zu erhalten.

12. Computervorrichtung nach Anspruch 9, wobei das Modul zur Positionierung des Zielbereichs (801) konfiguriert ist zum: Abfragen einer Zielmerkmalspunkt-Position in einem Zielbereich in einem vorhergehenden Einzelbild des aktuellen Bildes; Bestimmen eines Zielvorauswahlbereichs in dem aktuellen Bild gemäß der abgefragten Zielmerkmalspunkt-Position in dem Zielbereich in dem vorhergehenden Einzelbild; und Erweitern des Zielvorauswahlbereichs in dem aktuellen Bild gemäß einem voreingestellten Vielfachen, um den Zielbereich in dem aktuellen Bild zu erhalten.

13. Computerlesbares Speichermedium, das ein Computerprogramm speichert, das, wenn es von einem Prozessor ausgeführt wird, den Prozessor veranlasst, die Schritte des Verfahrens nach einem der Ansprüche 1 bis 7 auszuführen.

## Revendications

1. Procédé de positionnement de point caractéristique, exécuté par un dispositif informatique, le procédé comprenant :
le positionnement (S202) d'une zone cible dans une image courante à l'aide d'un modèle de détection de cible, la zone cible dans l'image courante étant une zone dans laquelle un point caractéristique cible est situé ;
la détermination d'une différence de pixels d'image entre une zone cible dans une image de référence et la zone cible dans l'image courante, l'image de référence étant une trame d'image qui est traitée avant l'image courante et qui inclut la zone cible ;
l'entrée (S204) de la différence de pixels d'image dans un modèle d'extraction de caractéristiques d'image pour obtenir une différence de caractéristiques d'image entre la zone cible dans l'image de référence et la zone cible dans l'image courante, dans lequel le modèle d'extraction de caractéristiques d'image est un modèle d'apprentissage automatique qui est entraîné à l'avance et qui est utilisé pour effectuer une extraction de caractéristiques d'image selon une différence de pixels d'image entre des zones cibles dans deux trames d'images respectives ;
l'entrée (S206) de la différence de caractéristiques d'image dans un modèle de détermination de différence de position de point caractéristique pour obtenir une différence de position de point caractéristique cible entre une position de point caractéristique cible dans la zone cible dans l'image de référence et la position de point caractéristique cible dans la zone cible dans l'image courante, dans lequel le modèle de détermination de différence de position de point caractéristique est un modèle d'apprentissage automatique qui est entraîné à l'avance et qui est utilisé pour déterminer une différence de position de point caractéristique selon une différence de caractéristiques d'image entre des zones cibles dans deux trames d'images respectives ; et
le positionnement (S208) d'un point caractéristique cible dans la zone cible dans l'image courante selon une position de point caractéristique cible dans la zone cible dans l'image de référence et la différence de position de point caractéristique cible.

2. Procédé selon la revendication 1, dans lequel la zone cible est une zone de visage, le point caractéristique cible est un point caractéristique de visage, et le procédé comprend en outre :
l'obtention d'une image selon une séquence temporelle ;
la détection d'une zone de visage dans l'image obtenue ;
la détermination, dans le cas où la zone de visage est détectée dans l'image obtenue, de l'image dans laquelle la zone de visage est détectée en tant qu'image de référence ; et
la détermination, après que l'image de référence est déterminée, d'une image qui est obtenue ensuite en tant qu'image courante.

3. Procédé selon la revendication 2, comprenant en outre :
l'interrogation d'une condition de remplacement d'image de référence ; et
la détermination, dans le cas où l'image qui est obtenue ensuite est déterminée en tant qu'image courante, de l'image courante obtenue dans le cas où la condition de remplacement d'image de référence est remplie en tant que nouvelle image de référence.

4. Procédé selon la revendication 2, comprenant en outre :
le positionnement de la zone de visage dans l'image de référence ;
le découpage d'une image de visage de référence selon la zone de visage positionnée dans l'image de référence ;
l'entrée de l'image de visage de référence dans un second modèle d'extraction de caractéristiques d'image ;
l'obtention d'une caractéristique d'image de référence délivrée en sortie par le second modèle d'extraction de caractéristiques d'image ; et
l'entrée de la caractéristique d'image de référence dans un modèle de positionnement de point caractéristique, pour obtenir la position de point caractéristique cible dans la zone cible dans l'image de référence.

5. Procédé selon la revendication 4, comprenant en outre :
la détermination d'une première confiance de l'image de visage de référence par un premier modèle de détermination de cible selon la caractéristique d'image de référence ; et
l'exécution de l'étape d'entrée de la caractéristique d'image de référence dans un modèle de positionnement de point caractéristique, pour obtenir le point caractéristique cible dans la zone cible dans l'image de référence, dans le cas où la première confiance atteint un premier seuil de confiance prédéfini.

6. Procédé selon la revendication 1, dans lequel le positionnement d'une zone cible dans une image courante comprend :
l'interrogation d'une position de point caractéristique cible dans une zone cible dans une trame d'image précédente de l'image courante ;
la détermination d'une zone de présélection de cible dans l'image courante selon la position de point caractéristique cible interrogée dans la zone cible dans la trame d'image précédente, la zone de présélection de cible étant une zone de présélection pour déterminer la zone cible ; et
l'expansion de la zone de présélection de cible dans l'image courante selon un multiple prédéfini, pour obtenir la zone cible dans l'image courante.

7. Procédé selon la revendication 1, comprenant en outre :
la détermination d'une seconde confiance de la zone cible par un second modèle de détermination de cible selon la différence de caractéristiques d'image ; et
l'exécution de l'étape de détermination d'une différence de position de point caractéristique cible entre la zone cible dans l'image de référence et la zone cible dans l'image courante par un modèle de détermination de différence de position de point caractéristique selon la différence de caractéristiques d'image, dans le cas où la seconde confiance atteint un second seuil de confiance prédéfini.

8. Dispositif informatique (800), comprenant :
un module de détection de zone cible (801), configuré pour positionner une zone cible dans une image courante, la zone cible dans l'image courante étant une zone dans laquelle un point caractéristique cible est situé ;
un module de détermination de différence de caractéristiques d'image (802), configuré pour déterminer une différence de pixels d'image entre une zone cible dans une image de référence et la zone cible dans l'image courante, l'image de référence étant une trame d'image qui est traitée avant l'image courante et qui inclut la zone cible ;
un modèle d'extraction de caractéristiques d'image, configuré pour recevoir la différence de pixels d'image et pour obtenir une différence de caractéristiques d'image entre la zone cible dans une image de référence et la zone cible dans l'image courante, dans lequel le modèle d'extraction de caractéristiques d'image est un modèle d'apprentissage automatique qui est entraîné à l'avance et qui est utilisé pour effectuer une extraction de caractéristiques d'image selon une différence de pixels d'image entre des zones cibles dans deux trames d'images respectives ;
un modèle de détermination de différence de position de point caractéristique (803), configuré pour recevoir la différence de caractéristiques d'image et pour obtenir une différence de position de point caractéristique cible entre une position de point caractéristique cible dans la zone cible dans l'image de référence et la position de point caractéristique cible dans la zone cible dans l'image courante, dans lequel le modèle de détermination de différence de position de point caractéristique est un modèle d'apprentissage automatique qui est entraîné à l'avance et qui est utilisé pour déterminer une différence de position de point caractéristique selon une différence de caractéristiques d'image entre des zones cibles dans deux trames d'images respectives ; et
un module de positionnement de point caractéristique cible (804), configuré pour positionner un point caractéristique cible dans la zone cible dans l'image courante selon une position de point caractéristique cible dans la zone cible dans l'image de référence et la différence de position de point caractéristique cible.

9. Dispositif informatique selon la revendication 8, dans lequel la zone cible est une zone de visage, le point caractéristique cible est un point caractéristique de visage, et le dispositif informatique comprend en outre :
un module de traitement d'image de référence (805), configuré pour : obtenir une image selon une séquence temporelle ; détecter une zone de visage dans l'image obtenue ; dans le cas où la zone de visage est détectée dans l'image obtenue, déterminer l'image dans laquelle la zone de visage est détectée en tant qu'image de référence ; et déterminer, après que l'image de référence est déterminée, une image qui est obtenue ensuite en tant qu'image courante.

10. Dispositif informatique selon la revendication 9, dans lequel le module de traitement d'image de référence (805) est configuré pour : interroger une condition de remplacement d'image de référence ; et dans le cas où l'image qui est obtenue ensuite est déterminée en tant qu'image courante, déterminer l'image courante obtenue dans le cas où la condition de remplacement d'image de référence est remplie en tant que nouvelle image de référence.

11. Dispositif informatique selon la revendication 9, dans lequel le module de traitement d'image de référence (805) est configuré pour : positionner la zone de visage dans l'image de référence ; découper une image de visage de référence selon la zone de visage positionnée dans l'image de référence ; entrer l'image de visage de référence dans un second modèle d'extraction de caractéristiques d'image ; obtenir une caractéristique d'image de référence délivrée en sortie par le second modèle d'extraction de caractéristiques d'image ; et entrer la caractéristique d'image de référence dans un modèle de positionnement de point caractéristique, pour obtenir une position de point caractéristique cible dans la zone cible dans l'image de référence.

12. Dispositif informatique selon la revendication 9, dans lequel le module de positionnement de zone cible (801) est configuré pour : interroger une position de point caractéristique cible dans une zone cible dans une trame d'image précédente de l'image courante ; déterminer une zone de présélection de cible dans l'image courante selon la position de point caractéristique cible interrogée dans la zone cible dans la trame d'image précédente ; et étendre la zone de présélection de cible dans l'image courante selon un multiple prédéfini, pour obtenir la zone cible dans l'image courante.

13. Support de stockage lisible par ordinateur, stockant un programme informatique qui, lorsqu'il est exécuté par un processeur, amène le processeur à exécuter les étapes du procédé selon l'une quelconque des revendications 1 à 7.
